# EUROPEAN PATENT SPECIFICATION

(11) **EP 0 780 199 B1**
(45) Date of publication and mention of the grant of the patent: **27.03.2002**
(21) Application number: 96114320.3
(22) Date of filing: 06.09.1996
(51) Int. Cl.: B26D 7/20, B26F 1/44, B23P 15/40

(54) **Method of producing a counter plate**
Herstellverfahren für eine Stanzplatte
Procédé de fabrication d une matrice pour un outil de découpage

(30) Priority: 19.12.1995 JP 33085795; 10.01.1996 JP 215496
(43) Date of publication of application: 25.06.1997
(73) Proprietor: Katayama Steel Rule Die, Inc., Shinjuku-ku, Tokyo 162 (JP); Yoshizawa Industry Inc., Nagaoka-shi, Niigata 940 (JP)
(72) Inventor: Yoshizawa, Akinori, c/o Yoshizawa Industry Inc., Nagaoka-shi, Niigata 940 (JP); Katayama, Isamu, c/o Katayama Steel Rule Die, Inc., Shinjuku-ku, Tokyo 162 (JP); Nagasawa, Shigeru, Santo-gun, Niigata 940-23 (JP)
(74) Representative: Strehl Schübel-Hopf & Partner

(56) References cited:
- EP-A- 0 276 461
- EP-A- 0 327 530
- WO-A-91/01386
- DE-A- 3 929 415
- GB-A- 2 180 504
- US-A- 5 211 084
- US-A- 5 370 028
- PATENT ABSTRACTS OF JAPAN vol. 11, no. 332 (C-455), 29 October 1987 & JP 62 116717 A (KOBE STEEL LTD), 25 August 1987,
- DATABASE WPI Week 9414 Derwent Publications Ltd., London, GB; AN 94-116269(14) XP002027315 & RU 2 004 603 C (KHABAROVSK POLY) , 15 December 1993
- PATENT ABSTRACTS OF JAPAN vol. 11, no. 34 (M-558), 31 January 1987 & JP 61 202734 A (TAKEFU TOKUSHU KOZAI KK), 8 September 1986,

## Description

### Back Ground of the Invention

### Field of the Invention

The present invention relates to method of manufacturing a counter plate according to the preamble of claim 1 (GB-A-2 180 504).

### Description of the Prior Art

Heretofore, die-cutting machines have been used for stamping a sheet-shaped material such as a synthetic resin film, a thin sheet of paper, and a sheet of carton board into a stamped piece thereof having a predetermined shape. The conventional die-cutting machine comprises a cutting die and a female die, by which a sheet-shaped material is stamped into a predetermined shape by pressing the cutting die against the material placed on the female die.

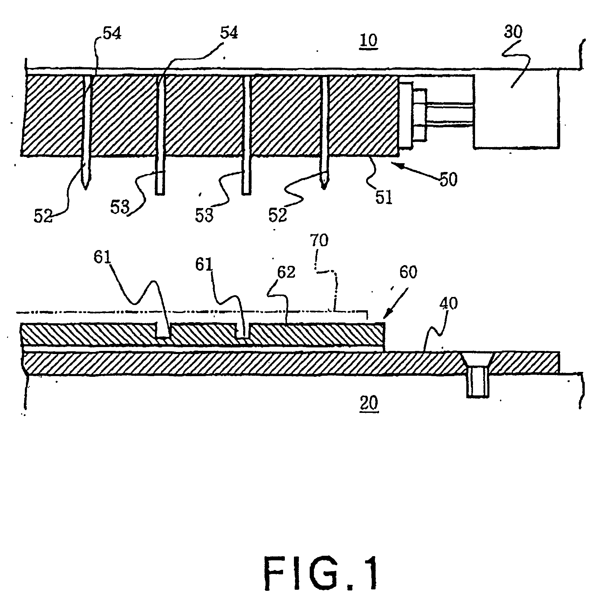

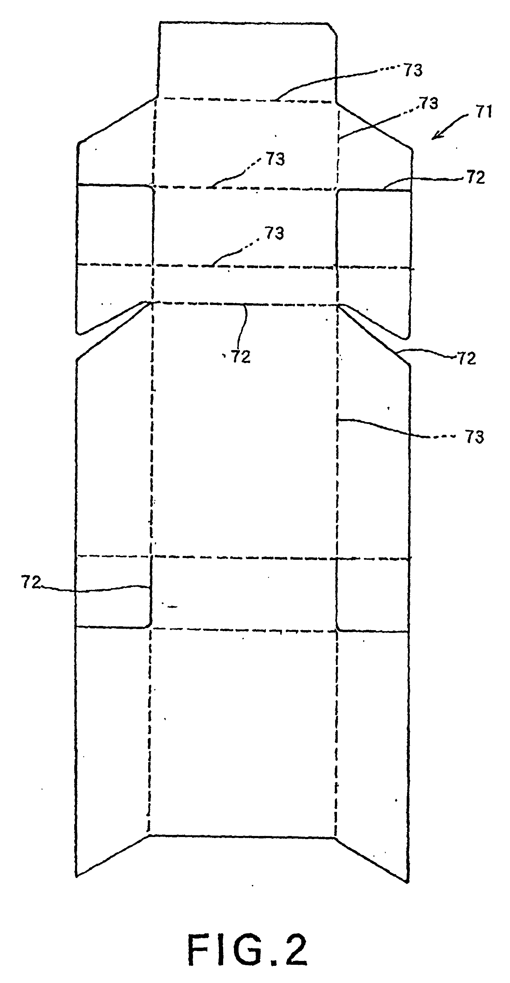

Fig. 1 illustrates a schematic cross sectional view of the prime constituents, the cutting die and the female die, of the conventional die-cutting machine. Also, Fig. 2 illustrates a plan view of a stamped piece of the sheeted material for a box board.

As shown in Fig. 1, the die-cutting machine comprises an upper slider 10, a lower platen 20, a chase 30 attached on the upper slider 10, a dead plate 40 attached on the lower platen 20. The chase 30 is one of general apparatuses to be accurately located and fixed on the upper slider 10 of the die-cutting machine, while the dead plate 40 is one of general apparatuses to be accurately located and fixed on the lower platen 20.

The cutting die 50 fixed on the upper slider is constructed by fixing cutting blades (knife rules) 52 and rulings (creasing rules) 53 on a base plate 51. In general, the base plate 51 is made of a veneer plate or a metal plate, on which fixing grooves 54 are formed by means of a laser-machining. On the other hand, both the cutting blades 52 and the rulings 53 are formed by bending a strip of plate material (steel rule) and inserted into grooves 54 formed on the base plate 51.

A counter plate 60 fixed on the dead plate 40 is made of a metal plate with a thickness of about 1.5 mm. The counter plate 60 is provided as a flat receiving surface 62 except portions formed as hollows or recesses 61 corresponding to the rulings 53.

In general, an iron plate (not shown in the figure) of about 5 mm thickness is attached to the die-cutting machine, so that the cutting blades 52 become positioned at a surface of the iron plate when the cutting die 50 moves downward. In this case, therefore, the counter plate 60 of about 1.5 mm in thickness is used and thus a thickness of the dead plate 40 is adjusted to about 3.5 mm.

The die-cutting machine so constructed is able to stamp a sheet of material 70 such as a synthetic resin film, a thin sheet of paper, and a sheet of box board into a desired shape by pressing the cutting blades 52 against the receiving surface 62 of the counter plate 60 by pulling down the cutting die 50 (i.e., from its resting position) after placing the sheet material 70 on the counter plate 60.

In Fig. 2, there is shown one of the examples of obtainable stamped pieces of the sheet material (hereinafter referred as a stamped sheet) by the die-cutting machine. The stamped sheet 71 is of desired shape and has cut lines 72 and ruled lines (creased lines) 73 (i.e., polygonal lines) as folds to bend. The cut line 72 is formed by contacting a tip of the cutting blades 52 on the receiving surface 62 of the counter plate 60 while the ruled line is formed by inserting a tip of the ruling 53 into the hollow 61.

As the cutting blade 52 comes into contact with the receiving surface 62, the counter plate 60 described above should be made of a material having an extremely high hardness (i.e., around HRC 50°), such as a high-hardness stainless steel. Therefore, it is a time-consuming job to make the hollows 61 on the counter plate 60 by a machining center and results in several disadvantages such as the high cost of production. By the way, it is desired that the counter plate 60 is prepared cost effectively because it shortens its useful life by forming a recessed area as a result of press-contacting with the cutting blade 52.

The cutting blade to be used in the cutting die described above is prepared typically from a band-shaped material having an extremely high hardness (i.e., around HRC 50°), so that it takes much time to cut the material into pieces having a predetermined length and bending each piece into a predetermined shape. It is noted that a spring-back can be occurred at the time of bending the cutting blade, so that a corrective action should be performed in consideration of the spring-back when the bending step is performed using a machine. Consequently, these operations are made in complicated steps.

### Summary of the Invention

It is an object of the present invention to provide a method for manufacturing a counter plate for a cutting-die which can be carried out more easily and economically.

This object is met by the method defined in claim 1. Preferred embodiments of the invention are set forth in the dependent claims.

The present invention is attained by new concepts of: obtaining a high-hardness counter plate by using a cheap material having a comparatively low hardness, which is easily machined with less expensive to prepare a counter plate; and hardening only a portion thereof corresponding to a cutting blade by means of a laser irradiation.

Therefore, the counter plate of the present invention may be made of a material selected from any materials, typically a thin steel plate, to be hardened by means of a laser irradiation. Preferably, by the way, a SK material as carbon tool steel may be used for obtaining a high hardness (i.e., about HRC 50°) by means of a laser irradiation. Considering of the formation of rust on a surface of the material, it is preferable to subject at least a surface of the material to plating. It is preferable to minimize a thickness of the thin steel plate from the points of cost-effectiveness and easy-handling. In the present invention, however, a thickness of the counter plate is in the range of 0.5 mm to 2 mm in consideration of forming the hollows thereon.

In the present invention, hollows (referred to as "recesses" in the claims) may be formed on the counter plate by way of the previously known cutting operations using a milling cutter or the like, or other operations using an etching, an electro-chemical machining, or the like.

For the hardening using the laser irradiation, on the other hand, it may be performed by the way of heating the material up to a predetermined temperature followed by cooling at a predetermined rate or over. simplify the process, a carbon dioxide laser beam machine for forming grooves on a base plate of the cutting die, which correspond to the cutting blades or the like, may be also used in the process for machining the counter plate. In this case, however, a typical laser beam machine may be also applicable.

The biggest advantage of the present invention is to provide a useful counter plate by hardening only portions thereof to be contacted with cutting blades of a cutting die. Furthermore, ditto for the formation of hollows, the hardening process is easily performed with the aid of CAD (computer-aided design) data used in the process of forming grooves of the base plate to be used for fixing cutting blades or the like, resulting that the machining operations can be down very easily. Accordingly, the counter plate can be provided by the process with less expensive as a consequence of simplified machining and of using a comparatively cheap material.

In the present invention, a necessary condition for the hardening process using a laser beam irradiation is to air-cooling after the irradiation. However, it may be also possible to apply forced cooling for portions with the difficulty of hardening, such as hardening crowded portions or a portion at the intersection of the hardening lines. For a coolant, cooling water, liquid nitrogen, or the like may be sprayed on a front or back side of the target portion directly after the laser irradiation. In the case of spraying water on the surface, there is a problem of laser beam absorption. In this case, however, this kind of absorption can be of a negligible amount when the carbon dioxide laser is used because the target portion is well hardened through a water layer with a thickness of several millimeters. This kind of the cooling can be effectively applied on a very thin steel plate in a sense of preventing the deformation of the plate, and so on to be caused by the hardening. Furthermore, it is preferable to use nozzle means to be moved in synchronization with a laser beam scanning.

Strictly speaking, in this kind of the hardening by irradiating the laser beam, it is preferable to keep an absorptivity of the laser energy constant on a surface of the plate. If the general steel plate is used as-is, the hardness to stand contact with the cutting blade is obtained at the minimum. For keeping the absorptivity of the laser energy constant, it is preferable to form a uniform layer on the surface by means of painting, printing, or the like. For example, it can be also performed by ejecting ink just at the front of a scanning position of the laser beam from an ink-jet nozzle. Alternatively, the surface may be polished.

In the present invention, especially in the case of using a thin material, there is a possibility that the material is deformed as a warp or the like to be caused by the hardening using the laser irradiation. The extent of the deformation can be reduced to a certain extent by means of cooling or the like. Alternatively, other type of hardened portion can be formed for canceling the warp of the whole material, for example the method of forming the hardened portion on the backside being opposed to the hardened portion of the surface, or the method of forming two hardened portions on the both sides of the backside being opposed to the hardened portion of the surface.

In the present invention, by the way, the hardening can be performed from the backside using the laser irradiation when it is subjected to a thin steel plate especially of about 1 mm or less in thickness. If the hardening is performed on such material from its surface, for example, a center of the material suffers upward warping so as to make a protuberance on the surface. If the hardening is performed on such material from its backside, on the other hand, a center of the material suffers downward warping so as to make a hollow on the back, resulting in the advantage of making easy to deal with.

For preparing the cutting die of the present invention, it is also realized by new idea of hardening only a cutting edge portion of the cutting blade by the process including the steps of: using a comparatively cheap material of not so high hardness and to be processed easily; machining the selected material into a predetermined shape followed by installing into a base plate; and hardening at least only the cutting edge portion by means of a laser beam irradiation.

In the present invention, allowing for the above circumstances, the required level of quality of the cutting blade may be capable of being subjected to the hardening using the laser beam irradiation. Therefore, the material of the cutting blade may be a thin steel plate in general. Preferably, a SK material as carbon tool steel may be used for obtaining a high hardness (i.e., about HRC 50°) by the laser beam hardening. Considering of the formation of rust of a surface of the material, it is preferable to subject at least a surface thereof to plating. A thickness of the cutting blade may be the same as that of the conventional one, typically of the order of 0.5 mm to 3 mm.

In the present invention, furthermore, the method for forming the cutting edge of the cutting blade is not restricted in narrow limits but it is possible to form the cutting edge by one of the previously known operations such as cutting and forging. In the case of a cutting operation, it is possible to machine a material to be provided as the cutting blade after hardening entirely. In this case, however, the material may be subjected to annealing after the machining and then only the cutting edge portion may be hardened by the laser irradiation. When the hardened material is machined without annealing or with slightly annealing, it may be acceptable to slightly harden the cutting blade throughout within the scope of the present invention.

The hardening of the cutting edge portion using a laser beam irradiation may be performed by irradiating the laser beam from the tip of the cutting edge to heat it up to the predetermined temperature and then cool it at the predetermined rate or over. Simplify the process, a carbon dioxide laser beam machine for forming grooves on a base plate of the cutting die, which correspond to the cutting blades or the like, may be also used. In this case, however, some typical laser beam machines may be also applicable.

The biggest advantage of the present invention is to provide a cutting die that allows easy processing and installation, in which at least the cutting edge of the cutting blade has a sufficient hardness as a result of easily hardening only the cutting edge. Furthermore, the hardening process is easily performed with the aid of CAD data used in the process of forming grooves of the base plate to be used for fixing cutting blades or the like, resulting that the machining operations can be down very easily. Accordingly, the cutting die can be provided by the process with less expensive as a consequence of simplified machining and of using a comparatively cheap material.

According to the present invention, the cutting blade comprises a base portion without being subjected to a substantial hardening and a hardened cutting edge portion. During the step of stamping, therefore, the base portion can be elastically deformed in a easy manner to absorb an impactive force to be applied on the cutting edge portion. It means that there is another advantage that a long wearing cutting edge portion can be obtained in accordance with present invention.

By the way, the laser beam hardening against the cutting blade to be installed in the cutting die of the present invention is performed under the same conditions as that of the counter plate described above.

The above and other objects, effects, features and advantages the present invention will become more apparent from the following description of embodiments thereof taken in conjunction with the accompanying drawings.

### Brief Description of the Drawings

Fig. 1 is a schematic cross sectional view of the conventional die-cutting machine;
Fig. 2 is a plain view of a sheet material stamped by the die-cutting machine;
Fig. 3 is a schematic cross sectional view of the die-cutting machine using the counter plate in accordance with the present invention;
Fig. 4 is a graph showing the results of Vickers hardness test on a surface of the edge-bearing portion of the counter plate in accordance with the present invention; and
Fig. 5 is a schematic cross sectional view of the die-cutting machine using the counter plate of one of preferred embodiments of the present invention.

### Detailed Description of the Preferred Embodiments

In the following description, we will explaining the present invention in conjunction with one of preferred embodiments thereof.

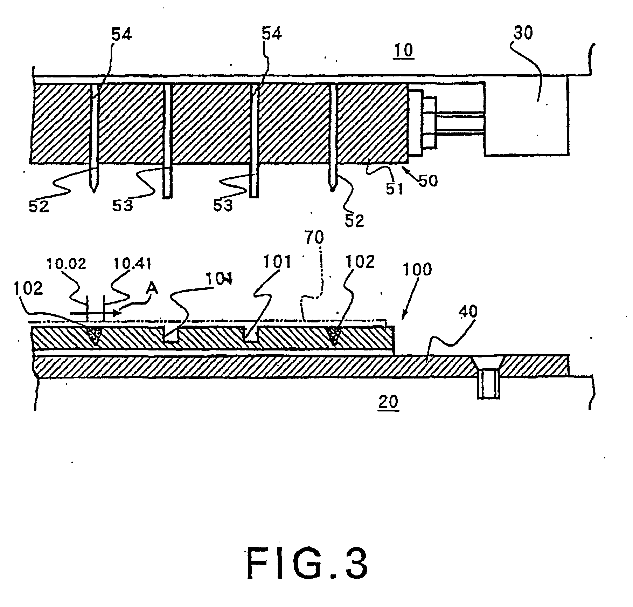

Referring now to FIG. 3, there is shown a schematic cross section of the die-cutting machine that uses a counter plate in accordance with the present invention. In the figure, each part corresponding to that of the conventional die-cutting machine (FIG. 1) explained in the earlier section "Back Ground of the Invention" is designated as the same reference numeral.

As shown in FIG. 3, a counter plate 100 is fixed on a dead plate 60 of a lower platen 20, while a chase 30 and a cutting die 50 are attached on an upper slider 10. The cutting die 50 is manufactured by fixing a plurality of cutting blades 52 and a plurality of rulings 53 on a base plate 51 made of a veneer plate having a plurality of grooves 54 formed by means of a carbon dioxide laser beam machining. In addition, the cutting blades 52 and the rulings 53 are formed by the process including the steps of bending a thin strip of flexible material and inserting bent portions thereof respectively into the grooves so as to be secured therein.

The counter plate 100 is made of an SK material of about 1.5 mm thickness and includes first portions that correspond to the rulings 53 and second portions that correspond to the cutting blades 52. The first portions are formed as hollows 101, while the second portions are provided as edge-bearing portions 102 which are prepared by means of a laser beam hardening. In this embodiment, a surface hardness of the edge-bearing portion 102 is around Hv 180. In addition, the counter plate 100 except the edge-bearing portions 102 has a surface hardness of around Hv 180.

The laser beam hardening applied in the present embodiment uses a carbon dioxide beam machine which is used for preparing the base plate as described above, under the conditions of: 500 W in output power; 10 inches in a focal length; and 2,400 mm/min. in a processing rate. Accordingly, the hardening process is easily performed with the aid of CAD data used in the process of forming grooves 54 of the base plate 51, resulting that the edge-bearing portions 102 can be obtained very easily. In this process, it is noted that there is no need to use additional devices, especially a cooling device.

Prior to the above hardening, furthermore, hollows 101 are formed by using a milling cutter. The counter plate 100 is easily processed because a hardness of SK material is comparatively not high. In this case, the process is also easily performed with the aid of CAD data described above.

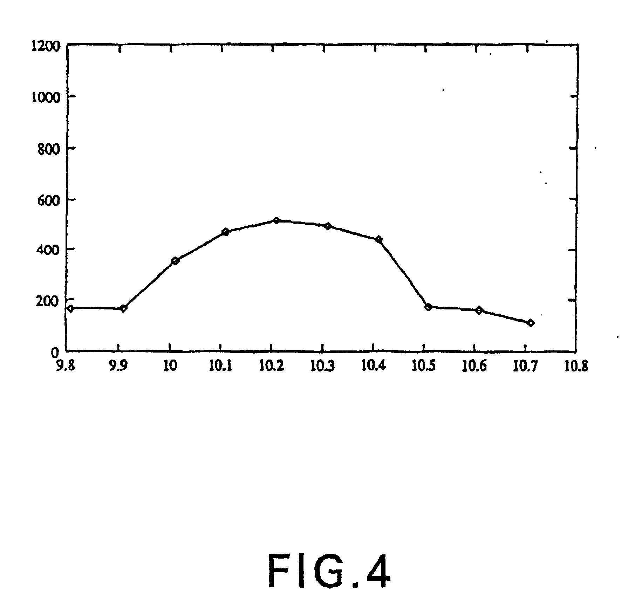

Referring now to FIG. 4, there is shown results of measuring the surface hardness (i.e., Vickers' hardness: Hv) of the counter plate 100 in the direction of an arrow A in FIG. 3 by using a Vickers' hardness tester under the conditions of a load weighting of 100g at a holding time of 30 seconds. In the figure, a lateral axis represents coordinates along the axis A, while a vertical axis represents the obtained values of Vickers' hardness. From the results shown in FIG. 4, the coordinates 10.02 - 10.41 corresponding to a width of the edge-bearing portion 102 take the values of Vickers' hardness in the range of about Hv 400 to about Hv 500, especially over Hv 500 in the middle. This hardness provides a sufficient strength of the cutting die 50 enough to guard against contact with the cutting blade 52.

As explained above, the counter plate of the present embodiment is prepared from a steel plate with a comparatively low hardness. The steel plate is easily machined with less expensive, and also a surface thereof is easily subjected to the hollow formation and the hardening process for providing an edge bearing portions, resulting that an extremely low cost counter plate.

Furthermore, a microscopic magnification of a section of the edge-bearing portion reveals that each hardened portion is formed as an arrow head in cross section, in which the width thereof is gradually decreased downward as shown in Fig. 3.

Accordingly, the present invention is realized by new concepts including that only an edge-bearing portion is subjected to the hardening process using a laser irradiation, so that the following advantages are obtained. It means that the process for manufacturing a counter plate including the step of hardening only a contact portion of a cutting blade of a cutting die can be effectively used to a considerable degree because of the following reasons:
(i) the counter plate is designed to keep up with the demands in which the volume of production is relatively low and there are a wide variety of products to be made; and
(ii) the process uses a thinner material compared with that of the conventional one so that it provides the counter plate cost effectively and improves the plate- handling.

Consequently, as described above, a cheap counter plate with high durability can be materialized by the process including the steps of using a cheap material to be easily machined and hardening only a portion corresponding to a cutting blade by means of a laser irradiation to easily form a high hardness edge-bearing portion.

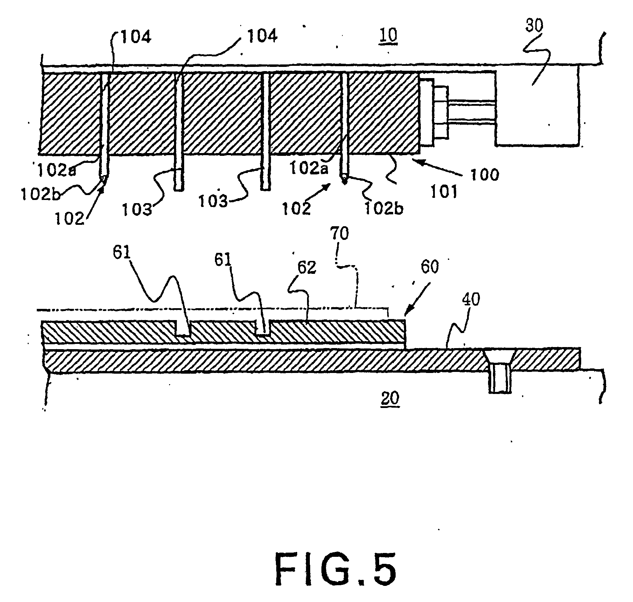

Referring now to FIG. 5, there is shown a schematic cross section of the die-cutting machine that uses a counter plate in accordance with the present invention. In the figure, by the way, each part corresponding to that of the conventional die-cutting machine (FIG. 1) explained in the earlier section "Back Ground of the Invention" is designated as the same reference numeral.

As shown in FIG. 5, a cutting die 100 comprises cutting blades 102 and rulings 103 which are mounted securely on a base plate 101. The base plate 101 is made of a veneer plate having a plurality of grooves 104 formed by means of a carbon dioxide laser beam machining. In addition, cutting blades 102 and rulings 103 are formed by the process including the steps of bending a thin strip of flexible plate material and inserting bent portions thereof respectively into the grooves so as to be secured therein. The cutting die 100 is fixed on an upper slider 10 with a chase 30, while a counter plate 60 is fixed on a dead plate 60 of a lower platen 20 made of a plate material of about 1.5 mm in thickness. In the lower platen 20, furthermore, hollows 61 are formed on appropriate portions corresponding to the rulings 103, respectively.

Each of the cutting blades 102 is formed as a band-shaped SK material of about 0.7 mm in thickness and mainly comprises a base portion 102a and an edge portion 102b. The base portion 102a is not hardened, while the edge portion 102b is hardened by a laser irradiation. The edge portion 102b is formed by the process including the steps of cutting a band-shaped material without hardening into a cutting edge portion 102b, roughly; cutting and bending the cutting edge blade 102 into a predetermined length so as to fit into a specified geometry of the above groove 104; inserting the cutting blade 102 into the groove 104 so as to be secured therein; and hardening the top portion thereof by a laser irradiation to obtain the hardened cutting edge portion 102b. In the present embodiment, a surface hardness of the cutting edge portion 102b is around Hv 500, while a surface hardness of the base portion 102a is around Hv 180.

The laser beam hardening applied in the present embodiment uses a device for carbon dioxide beam machining, which is used for preparing the base plate as described above, under the conditions of: 500 W in output power; 10 inches in a focal length; and 2,400 mm/min. in a processing rate. Accordingly, the hardening process is easily performed with the aid of CAD data used in the process of forming grooves 104 of the base plate 101, resulting that the machining is performed very easily. In this machining, it is noted that there is no need to use additional devices, especially a cooling device.

Prior to the above hardening, furthermore, the steps of cutting and bending for preparing the above cutting blade 102 are easily performed because the SK material having not great hardness. The bending in particular is easily performed without a corrective action on a spring-back.

As a consequence of the above process in which a cutting die is constructed by the process including the steps of machining a cheap and easy-machining steel plate having lower hardness compared with that of the conventional one, instead of machining a high-hardness steel being used in the process for preparing the conventional cutting edge; and hardening only the cutting edge by means of a laser irradiation after fixing securely on the base plate, resulting in a very cheap cutting die.

Furthermore, a microscopic magnification of a section of the edge portion reveals that each hardened portion is formed.

Accordingly, the present invention is realized by new concepts including that only the edge portion of the cutting blade is subjected to the hardening process using a laser irradiation. That is, it means that the process for manufacturing a counter plate including the step of hardening only the edge portion of the cutting blade can be effectively used to a considerable degree because of the following reasons:
(I) the counter plate is designed to keep up with the demands in which the volume of production is relatively low and there are a wide variety of products to be made; and
(ii) the process uses a thinner material compared with that of the conventional one so that it provides the counter plate cost effectively and improves the plate- handling.

Consequently, as described above, a cheap cutting die with high durability can be materialized by the process including the steps of using a cheap material to be easily machined and hardening only an edge portion of a cutting blade by means of a laser irradiation to easily form a high hardness cutting blade.

Although the foregoing invention has been described in some detail by way of illustration and example for purposes of clarity of understanding, it will be obvious that certain changes and modifications may be practiced within the scope of the appended claims.

The present invention has been described in detail with respect to preferred embodiments, and it will now be that changes and modifications may be made without departing from the invention in its broader aspects, and it is the invention, therefore, in the appended claims to cover all such changes and modifications as fall within the scope of the invention.

## Claims

1. A method for manufacturing a counter plate (**100**) for a cutting die (**50**) having cutting blades (**52**) and rulings (**53**) for stamping sheet material into a predetermined shape and making ruled lines thereon, the counter plate (**100**) being provided with recesses (**101**) corresponding to said rulings (**53**) and edge-bearing portions (**102**) corresponding to said cutting blades (**52**),
**characterised in that**
a thin steel plate is used as said counter plate (**100**),
said edge-bearing portions (**102**) are hardened by laser beam irradiation, and
deformations of said counter plate (**100**), caused by said laser beam irradiation, are corrected before or after said irradiation.

2. The method of claim 1, wherein the correction is performed by hardening using laser beam irradiation on the back of said counter plate (**100**).

3. The method of claim 2, wherein the laser beam hardening on the back of said counter plate (**100**) is performed at portions corresponding to said edge-bearing portions (**102**).

4. The method of claim 2, wherein the laser beam hardening on the back of said counter plate (**100**) is performed at both side areas of portions corresponding to said edge-bearing portions (**102**).

5. The method of any preceding claim, wherein portions to be hardened by laser beam irradiation are pre-treated to keep their absorptivity for the laser energy constant.

6. The method of any preceding claim, wherein portions irradiated by laser beam are cooled after said laser beam irradiation.

7. The method of any preceding claim, wherein said laser beam irradiation is done using a carbon dioxide laser.

8. The method of any preceding claim, wherein said laser beam irradiation is performed using CAD data that were used in forming grooves (**104**) for fixing said cutting blades (**52**) on said cutting die (**50**).

## Patentansprüche

1. Verfahren zum Herstellen einer Gegenplatte (100) für ein Stanzwerkzeug (50), das Schneidmesser (52) und Linienzieher (53) zum Stanzen von Folienmaterial auf vorgegebene Form und Erzeugen von Linien darauf aufweist, wobei die Gegenplatte (100) mit den Linienziehern (53) entsprechenden Vertiefungen (101) und den Stanzmessern (52) entsprechenden Kantenauflageteilen (102) versehen ist,
**dadurch gekennzeichnet,**
**daß** als Gegenplatte (100) eine dünne Stahlplatte verwendet wird,
**daß** die Kantenauflageteile (102) durch Laserbestrahlung gehärtet werden, und
**daß** durch die Laserbestrahlung verursachte Deformationen der Gegenplatte (100) vor oder nach der Bestrahlung korrigiert werden.

2. Verfahren nach Anspruch 1, wobei die Korrektur durch Härten unter Anwenden von Laserbestrahlung auf die Rückseite der Gegenplatte (100) durchgeführt wird.

3. Verfahren nach Anspruch 2, wobei die Laserstrahlhärtung der Rückseite der Gegenplatte (100) an den Kantenauflageteilen (102) entsprechenden Teilen erfolgt.

4. Verfahren nach Anspruch 2, wobei die Laserstrahlhärtung an der Rückseite der Gegenplatte (100) in beiden Seitenbereichen von Kantenauflageteilen (102) entsprechenden Teilen erfolgt.

5. Verfahren nach einem der vorhergehenden Ansprüche, wobei durch Laserbestrahlung zu härtende Teile vorbehandelt werden, um ihr Absorptionsvermögen für die Laserenergie konstant zu halten.

6. Verfahren nach einem der vorhergehenden Ansprüche, wobei laserbestrahlte Teile nach der Laserbestrahlung gekühlt werden.

7. Verfahren nach einem der vorhergehenden Ansprüche, wobei die Laserbestrahlung unter Verwendung eines Kohlenstoffdioxid-Lasers erfolgt.

8. Verfahren nach einem der vorhergehenden Ansprüche, wobei die Laserbestrahlung unter Verwendung von CAD-Daten erfolgt, die bei der Ausbildung von Nuten (104) zur Befestigung der Stanzmesser (52) an der Stanzvorrichtung (50) verwendet wurden.

## Revendications

1. Procédé de fabrication d'une contre-plaque (100) pour outil de découpage (50) ayant des lames de coupe (52) et des réglures (53) pour emboutir une matière en feuille afin de lui donner une forme prédéterminée et de tracer des lignes sur celle-ci, la contre-plaque (100) comportant des creux (101) correspondant auxdites réglures (53) et des parties (102) porteuses d'arêtes correspondant auxdites lames de coupe (52),
**caractérisé en ce que**
une mince tôle d'acier est utilisée comme contre-plaque (100)
lesdites parties (102) porteuses d'arêtes sont durcies par irradiation laser, et
des déformations de ladite contre-plaque (100), provoquées par ladite irradiation laser, sont corrigées avant ou après ladite irradiation.

2. Procédé selon la revendication 1, dans lequel la correction est effectuée par durcissement par irradiation laser au dos de ladite contre-plaque (100).

3. Procédé selon la revendication 2, dans lequel le durcissement par laser au dos de ladite contre-plaque (100) est réalisé dans des parties correspondant auxdites parties (102) porteuses d'arêtes.

4. Procédé selon la revendication 2, dans lequel le durcissement par laser au dos de ladite contre-plaque (100) est réalisé sur les deux faces de parties correspondant auxdites parties (102) porteuses d'arêtes.

5. Procédé selon l'une quelconque des revendications précédentes, dans lequel les parties à durcir par irradiation laser sont prétraitées pour maintenir constante leur absorptivité pour l'énergie laser.

6. Procédé selon l'une quelconque des revendications précédentes, dans lequel les parties irradiées par laser sont refroidies après ladite irradiation laser.

7. Procédé selon l'une quelconque des revendications précédentes, dans lequel ladite irradiation laser est effectuée à l'aide d'un laser à dioxyde de carbone.

8. Procédé selon l'une quelconque des revendications précédentes, dans lequel ladite irradiation laser est effectuée à l'aide de données de CAO qui ont été utilisées lors de la formation de gorges (104) servant à fixer lesdites lames de coupe (52) sur ledit outil de coupe (50).
